# EUROPÄISCHE PATENTSCHRIFT

(11) **EP 3 217 063 B1**
(45) Veröffentlichungstag und Bekanntmachung des Hinweises auf die Patenterteilung: **11.12.2019**
(21) Anmeldenummer: 17157512.9
(22) Anmeldetag: 23.02.2017
(51) Int. Cl.: F16P 3/14, F16P 1/02

(54) **SICHERHEITSVORRICHTUNG FÜR EINEN PALETTIERER SOWIE SYSTEM MIT EINEM PALETTIERER UND EINER SICHERHEITSVORRICHTUNG SOWIE VERFAHREN**
SAFETY DEVICE FOR A PALLETIZER AND SYSTEM WITH A PALLETISER AND A SAFETY DEVICE AND METHOD
DISPOSITIF DE SÉCURITÉ POUR UN PALETTISEUR ET SYSTÈME COMPRENANT UN PALETTISEUR ET UN DISPOSITIF DE SÉCURITÉ ET PROCÉDÉ

(30) Priorität: 23.02.2016 DE 102016103185; 09.09.2016 DE 102016117018
(43) Veröffentlichungstag der Anmeldung: 13.09.2017
(73) Patentinhaber: Windmöller & Hölscher KG, 49525 Lengerich (DE)
(72) Erfinder: Tillmann, Guido, 48607 Ochtrup (DE); Trame, Jan, 49134 Wallenhorst (DE)
(74) Vertreter: Vogel, Andreas

(56) Entgegenhaltungen:
- DE-A1-102006 029 643
- DE-A1-102007 036 677
- DE-U1- 29 920 715

## Beschreibung

Die vorliegende Erfindung betrifft eine Sicherheitsvorrichtung für einen Palettierer, ein System mit einem Palettierer und einer Sicherheitsvorrichtung sowie ein Verfahren zur Erhöhung einer Sicherheit einer Fördereinheit eines Palettierers.

Palettierer dienen im Allgemeinen dazu, ein Fördergut auf einer Palette zu stapeln und somit beispielsweise transport- oder verkaufsfähig zu machen. Dabei wird das Fördergut in Säcken oder einzelnen Produkteinheiten auf einer Palette geschichtet. Ist die gewünschte Höhe der Palette mit den verschiedenen Schichten des Fördergutes erreicht, kann eine entsprechend entstandene Paletteneinheit beispielsweise zum Ausgang des Palettierers oder zu einer weiteren Verarbeitungsstation, wie beispielsweise einer weiteren Verpackungsstation, abtransportiert werden. Da es sich bei dem palettierten Fördergut häufig um sehr schwere Einheiten handelt und innerhalb des Palettierers verschiedene potenziell verletzungsgefährliche Mechanismen wirken, ist es wünschenswert, Sicherheitsmaßnahmen vorzusehen, welche insbesondere bei laufenden Maschinen die Verletzungsgefahr eines Benutzers reduzieren.

Dementsprechend sind Sicherheitsvorrichtungen für einen Palettierer grundsätzlich bekannt. Aus der DE102007036677 A1 ist zum Beispiel eine Sicherheitsvorrichtung nach dem Oberbegriff des Anspruchs 1 bekannt.

So werden häufig beispielsweise Rolltore am Palettierer vorgesehen, welche beim Palettierungsvorgang geschlossen sind und sich nur für die Durchfahrt einer Palette öffnen. Dabei finden jedoch unterschiedliche Produkte zur Palettierung und damit unterschiedliche Anforderungen an die Ausfahrt bzw. den Abtransport der Paletteneinheiten keine Berücksichtigung. Obwohl der Zugang zum Palettierer häufig gesichert ist, wenn keine Palette ausfährt, kann es bei Abtransport einer Palette notwendig sein bekannte Sicherheitsmechanismen zu deaktivieren, wie beispielsweise im Fall des Rolltores, dieses zu öffnen. Dabei kann allerdings zwischen einer schmalen Palette und dem Aufbau der jeweiligen Fördereinheit ein Spalt entstehen, sodass ein Benutzer an der ausfahrenden Palette vorbei in die laufende Maschine greifen oder gelangen kann. Weiterhin sind beispielsweise Erkennungssensoren bekannt, um den Ausfahrtbereich zu überwachen und bei einem unbefugten Zugang eines Benutzers die Maschine abzustellen. Dabei können diese Erkennungssensoren jedoch nicht zwischen der Palette und einem Benutzer unterscheiden, sodass bei Ausfahrt der Palette die Erkennungssensoren vollständig abgeschaltet werden müssen.

Es ist Aufgabe der Erfindung, voranstehende aus dem Stand der Technik bekannte Nachteile zumindest teilweise zu beheben. Insbesondere ist es Aufgabe der vorliegenden Erfindung, eine Sicherheit bei dem Abtransport von Paletteneinheiten und/oder bei der Ausgabe eines Fördergutes in kostengünstiger und einfacher Weise bei geringem Bauraumbedarf zu erhöhen.

Die voranstehende Aufgabe wird gelöst durch eine Sicherheitsvorrichtung mit den Merkmalen des Anspruchs 1, ein System mit den Merkmalen des Anspruchs 12 sowie ein Verfahren mit den Merkmalen des Anspruchs 15.

Weitere Merkmale und Details der Erfindung ergeben sich aus den Unteransprüchen, der Beschreibung und den Zeichnungen. Dabei gelten Merkmale und Details, die in Zusammenhang mit der erfindungsgemäßen Sicherheitsvorrichtung beschrieben worden sind, selbstverständlich auch in Zusammenhang mit dem erfindungsgemäßen System und/oder dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Erfindungsgemäß weist die Sicherheitsvorrichtung für einen Palettierer eine Detektionsvorrichtung auf, die an einer Fördereinheit des Palettierers, welche zum Abtransport einer Paletteneinheit dient, anordbar ist. Dabei ist die Detektionsvorrichtung derart ausgebildet, dass ein unbefugter Zugang eines Benutzers zur Fördereinheit in einem Transportspalt zwischen der Paletteneinheit und der Fördereinheit beim Abtransport der Paletteneinheit zumindest bis zu einer definierten Breite der Paletteneinheit detektierbar ist. Ferner ist die Detektionsvorrichtung derart ausgebildet, dass zumindest ab der definierten Breite der Paletteneinheit der Abtransport der Paletteneinheit detektierbar ist.

Vorzugsweise kann die Detektionsvorrichtung an einem Förderausgang der Fördereinheit anordbar sein. Somit kann die Fördereinheit des Palettierers einen Maschinenauslauf darstellen und damit Teil des Palettierers sein oder an diesem angeordnet sein. Vorzugsweise kann die Fördereinheit ein Band, einen Rollenförderer, einen Kran oder dergleichen zur Beförderung der Paletteneinheit aufweisen. Unter einer Paletteneinheit kann im Sinne der vorliegenden Erfindung eine Palette mit einem entsprechend aufgestapelten Fördergut oder eine einzelne leere Palette verstanden werden. Beim Abtransport der Paletteneinheit kann vorgesehen sein, dass die Paletteneinheit die Fördereinheit verlässt oder innerhalb der Fördereinheit weiter befördert wird. Weiterhin kann unter dem unbefugten Zugang eines Benutzers zur Fördereinheit ein teilweiser Zugang, wie beispielsweise das Hineinstecken einer Hand oder eines anderen Körperteils, oder ein vollständiger Zugang durch Betreten der Fördereinheit durch den Benutzer verstanden werden. Da diese Bewegung normalerweise von außen nach innen in die Fördereinheit erfolgt, ist es somit vorteilhaft, wenn eine derartige Bewegung detektierbar ist. Ferner ist es vorteilhaft, dass zumindest ab der definierten Breite der Paletteneinheit der Abtransport der Paletteneinheit detektierbar ist. Unter einer definierten Breite der Paletteneinheit kann im Sinne der vorliegenden Erfindung eine Breite verstanden werden, welche durch die Ausgestaltung der Detektionsvorrichtung nicht oder nur teilweise detektierbar ist. So ist es denkbar, dass ab der definierten Breite beim Abtransport der Paletteneinheit diese unkritisch wirkt, da der Transportspalt in diesem Fall ohnehin schmal ist und ein Zugang durch den Transportspalt erschwert oder verhindert ist. Dabei kann die Detektionsvorrichtung derart ausgebildet sein, dass lediglich ein Förderausgang der Fördereinheit überwacht wird oder die gesamt Fördereinheit entlang einer Förderrichtung der Paletteneinheit. Vorzugsweise kann es ausreichen, nur einen Teil der Fördereinheit, insbesondere den Förderausgang, durch die Detektionsvorrichtung zu sichern, da bei der Ausfahrt der Paletteneinheit, z.B. bei Deaktivierung anderer Sicherheitsinstrumente, eine Möglichkeit zum unbefugten Zugang durch den Transportspalt entstehen kann.

Insbesondere sind unterschiedliche Breiten von Paletteneinheiten durch den Palettierer bearbeitbar und können beispielsweise in kritische und unkritische Breiten der Paletteneinheiten unterteilt werden. Während bei einer breiteren Paletteneinheit der Transportspalt zwischen der Fördereinheit bzw. einem Rahmen der Fördereinheit klein ist, sodass ein Benutzer nicht hineingreifen kann oder zumindest das Risiko des Erreichens von riskanten Bereichen des Palettierers erschwert ist, kann beim Abtransport einer schmalen Paletteneinheit der Transportspalt größer sein und dadurch ein unbefugter Zugang ermöglicht sein, insbesondere bei welchem der Benutzer sich durch den Transportspalt an der Paletteneinheit vorbei in die Fördereinheit begeben könnte. Der Transportspalt kann dabei vorzugsweise seitlich der Paletteneinheit entstehen, wenn diese einen Förderausgang der Fördereinheit und/oder die Detektionsvorrichtung passiert bzw. durchfährt. Somit kann die Detektionsvorrichtung derart anordbar sein, dass zumindest in einem Abschnitt während des Abtransports der Paletteneinheit der Transportspalt durch die Detektionsvorrichtung zumindest teilweise, insbesondere zumindest passiv, überwachbar ist. Während der Abtransport der Paletteneinheit insbesondere von innen nach außen erfolgt, erfolgt der Zugang von außen nach innen in die Fördereinheit. Passiert nun ein Objekt die Detektionsvorrichtung, kann die Detektionsvorrichtung vorzugsweise unterscheiden, ob es sich um eine Bewegung von außen nach innen oder von innen nach außen handelt. Handelt es sich um eine Bewegung von außen nach innen, kann vorteilhafterweise eine Sicherungsfunktion, wie beispielsweise ein Abschalten des Palettierers oder eine Ausgabe eines Signals zur Warnung des Benutzers, auslösbar sein. Wird jedoch eine Bewegung von innen nach außen festgestellt, da beispielsweise eine breite Paletteneinheit abtransportiert wird, kann der Transportspalt, wie zuvor beschrieben, reduziert sein, sodass ein unbefugter Zugang des Benutzers erschwert ist und daher eine Sicherungsfunktion nicht notwendig ist. Somit ist ein reibungsloser Abtransport der Paletteneinheit insbesondere gesichert und eine Sicherheit gegen einen unbefugten Zugang eines Benutzers gleichzeitig erhöht. Die definierte Breite der Paletteneinheit kann dabei zum Beispiel durch die Anordnung der Detektionsvorrichtung definiert sein. Vorzugsweise kann die definierte Breite zwischen 0 mm und 2000 mm, bevorzugt zwischen 600 mm und 1200 mm, liegen. Die Detektionsvorrichtung kann seitlich des Abtransports der Paletteneinheit anordbar sein, so dass ein Transportspalt während des Abtransportes der Paletteneinheit zumindest teilweise durch die Detektionsvorrichtung zur Detektion abgedeckt ist, sofern die Paletteneinheit schmal ist, und gleichzeitig der durch die Detektionsvorrichtung abgedeckte Bereich auch für die Durchfahrt einer breiteren Palette genutzt werden kann, ohne eine Warnmeldung oder ein Anhalten des Betriebsablaufes auszulösen.

Bei der erfindungsgemäßen Sicherheitsvorrichtung umfasst die Detektionsvorrichtung ein erstes und ein zweites Detektionselement, wobei das erste und das zweite Detektionselement jeweils durch die Paletteneinheit ab der definierten Breite und/oder durch den unbefugten Zugang betätigbar ist, wodurch eine Sicherungsfunktion auslösbar ist, wenn das erste Detektionselement vor dem zweiten Detektionselement betätigt wird. Dabei können das erste und zweite Detektionselement insbesondere derart anordbar sein, dass sie jeweils parallel zueinander zur Detektion des unbefugten Zugangs oder des Abtransports der Paletteneinheit wirken. Unter einem Detektionselement kann im Sinne der vorliegenden Erfindung vorzugsweise eine Einheit von Komponenten verstanden werden, die zusammen einen Detektionsbereich schaffen, insbesondere in welchem eine Bewegung detektierbar ist. Dabei kann das Detektionselement z.B. mechanisch ausgebildet sein. So kann eine Betätigung dadurch erfolgen, dass zumindest ein Teil des Detektionselementes, wie eine Klappe, verschwenkt wird und einen Schalter auslöst, so dass ein elektrisches Signal erzeugt wird. Eine Betätigung der Detektionselemente kann zum Beispiel durch eine Wechselwirkung eines Objektes, wie der Paletteneinheit oder des Benutzers, mit dem Detektionselement auslösbar sein. Somit kann es vorteilhaft sein, wenn das erste Detektionselement in einer Förderrichtung der Paletteneinheit hinter dem zweiten Detektionselement anordbar ist, sodass bei einer ausfahrenden Palette zuerst das zweite Detektionselement durch die Paletteneinheit betätigt wird und dann das erste Detektionselement, und bei einem unbefugten Zugang von außen zuerst das erste Detektionselement betätigt wird und dann das zweite Detektionselement. Dadurch ist durch eine einfache räumliche Anordnung der Detektionselemente zwischen einer durchfahrenden Paletteneinheit und einem unbefugten Zugang unterscheidbar. Unter einer Betätigung des ersten Detektionselementes vor dem zweiten Detektionselement kann dabei eine Betätigung des ersten Detektionselementes zeitlich vor dem zweiten Detektionselement verstanden werden oder ausschließlich eine Betätigung des ersten Detektionselementes, ohne dass das zweite Detektionselement betätigt ist. Dieser Status kann beispielsweise nach einer Durchfahrt der Paletteneinheit und damit nach einem Betätigen des zweiten Detektionselementes vor dem ersten Detektionselement zurückgesetzt werden, so dass bei der nächsten Betätigung der Detektionselemente erneut die Reihenfolge, wie zuvor beschrieben, unterscheidbar ist.

Ferner ist es denkbar, dass das erste und zweite Detektionselement derart anordbar sind, dass eine Sicherungsfunktion auslösbar ist, wenn das erste Detektionselement vor dem zweiten Detektionselement betätigt wird, während das erste Detektionselement noch immer betätigt ist. Zusätzlich oder alternativ kann es vorteilhaft sein, wenn das erste und zweite Detektionselement dazu ausgebildet sind, die definierte Breite der Paletteneinheit zu detektieren, wenn das zweite Detektionselement vor dem ersten Detektionselement betätigt wird, insbesondere wobei das zweite Detektionselement noch betätigt ist, während das erste Detektionselement betätigt wird. Dadurch können je nach Ausgestaltung der Maschine und des Arbeitsprozesses verschiedene Maßnahmen getroffen werden, um eine Empfindlichkeit des Systems zu justieren. So kann es insbesondere vorgegeben sein, das erste und das zweite Detektionselement zu betätigen, um die Sicherungsfunktion auszulösen und eine Fehldetektion durch eine vereinzelte Betätigung, z.B. lediglich des ersten Detektionselementes, zu vermeiden. Je nach Anwendungsfall kann es somit vorteilhaft sein, wenn nicht lediglich das erste Detektionselement betätigt wird, sondern in einer Abfolge das erste vor dem zweiten Detektionselement, um die Sicherungsfunktion auszulösen. Durch eine geschickte Anordnung des ersten und zweiten Detektionselementes kann somit der Benutzer beim unbefugten Zugang zum Betätigen des ersten und des zweiten Detektionselementes gezwungen sein.

Im Rahmen der Erfindung kann ferner vorgesehen sein, dass das erste und das zweite Detektionselement mit einer Steuereinheit zum Auslösen der Sicherungsfunktion in Kommunikationsverbindung bringbar sind. Dabei kann die Sicherungsfunktion ein Auslösen eines Signals zum zumindest teilweisen Abschalten des Palettierers umfassen. Somit kann ein Betätigen des ersten und/oder zweiten Detektionselementes dazu führen, dass die Steuereinheit die Sicherungsfunktion insbesondere elektronisch auslöst. Ferner kann die Detektionsvorrichtung und/oder der Palettierer die Steuereinheit aufweisen. Die Kommunikationsverbindung kann eine kabelgebundene Kommunikationsverbindung oder eine drahtlose Kommunikationsverbindung, zum Beispiel durch Wi-Fi, Bluetooth oder dergleichen sein. Dadurch, dass die Sicherungsfunktion über eine Steuereinheit ausgelöst wird, kann die Unterscheidung zwischen dem unbefugten Zugang und dem Abtransport der Paletteneinheit in besonders einfacher Art und Weise ausgeführt sein, wobei beispielsweise eine Reihenfolge des ersten und zweiten Detektionselementes berücksichtigt wird. Dies kann beispielsweise auch durch eine Software umgesetzt sein. Ferner kann vorgesehen sein, dass die Steuereinheit derart ausgebildet ist, dass die Detektion des unbefugten Zugangs des Benutzers und/oder des Abtransportes der Paletteneinheit ein Auslösen des ersten und zweiten Detektionselementes in einem bestimmten Zeitintervall erfordert. Auch dies ist durch eine elektronische Schaltung und/oder eine Software kostengünstig realisierbar. Somit kann die Steuereinheit vorteilhafterweise eine Logik umfassen, welche in der Lage ist, die Detektion des Abtransports der Paletteneinheit und/oder des unbefugten Zugangs z.B. auf Grundlage von Betätigungssignalen der Detektionselemente zu unterscheiden und/oder festzustellen. Insbesondere können das erste und zweite Detektionselement mit der Steuereinheit zum Auslösen der Sicherungsfunktion in Kommunikationsverbindung stehen. Somit kann die Steuereinheit in die Sicherheitsvorrichtung integriert sein oder die Steuereinheit extern der Sicherheitsvorrichtung, z.B. als Teil eines Palettierers, vorgesehen sein.

Im Rahmen der Erfindung kann ferner vorgesehen sein, dass das erste und/oder das zweite Detektionselement ein Sensorelement aufweist. So kann das Sensorelement beispielsweise als Näherungssensor ausgebildet sein. Dabei kann ein unbefugter Zugang eines Benutzers oder der Abtransport der Paletteneinheit induktiv und/oder kapazitiv durch das Sensorelement erfassbar sein. Dies stellt eine einfache und zuverlässige Möglichkeit dar, den unbefugten Zugang bzw. den Abtransport der Paletteneinheit zu detektieren. Vorzugsweise ist das Sensorelement ein optisches Sensorelement. Das optische Sensorelement kann daher eine Lichtschranke sein, wobei der Lichtstrahl im Normalbetrieb von einem Reflektorelement reflektiert wird und bei Betätigung zumindest die Reflexion des Reflektorelementes, beispielsweise durch den Benutzer oder die Paletteneinheit, unterbrochen ist. Dadurch ist eine einfache und kostengünstige Realisierung der Detektionselemente möglich. Ein optisches Sensorelement bietet darüber hinaus den Vorteil, dass der Anteil mechanischer Komponenten der Sicherheitsvorrichtung reduziert oder eliminiert ist, sodass das Risiko einer Beschädigung der mechanischen Komponenten reduziert ist.

Es ist ferner denkbar, dass bei einer erfindungsgemäßen Sicherheitsvorrichtung das Sensorelement ein Lichtabgabemodul aufweist, durch welches zumindest ein Lichtstrahl aussendbar ist. Dabei kann das Sensorelement ein Lichtaufnahmemodul zur Detektion einer Reflexion des Lichtstrahls durch den Benutzer aufweisen. Somit kann das Sensorelement vorteilhafterweise als Lichttaster ausgebildet sein, insbesondere wobei ein zusätzliches Bauteil als Reflektor nicht notwendig ist. Dadurch ist eine Verschmutzungsgefahr des Reflektors eliminiert, da lediglich Lichtabgabe- und Lichtaufnahmemodul verschmutzen können. Unter einem Lichtstrahl kann im Sinne der vorliegenden Erfindung vorzugsweise ein gebündeltes und/oder konzentriertes Licht verstanden werden, welches eine zumindest im Wesentlichen lineare Ausbreitungsrichtung aufweist. Vorzugsweise kann das Lichtabgabemodul dabei derart ausgebildet sein, dass der aussendbare Lichtstrahl eine Wellenlänge aufweist, die für das menschliche Auge unsichtbar ist. Dadurch kann die Sicherheit der Sicherheitsvorrichtung weiter erhöht sein, da ein Benutzer, welcher einen unbefugten Zugang im Sinn hat, die Positionierung des Lichtstrahls nicht exakt feststellen kann und seine Bewegung somit erschwert zur Umgehung der Sicherheitsvorrichtung anpassen kann.

Im Rahmen der Erfindung kann ferner vorgesehen sein, dass das Sensorelement derart an der Fördereinheit anordbar ist, dass der Lichtstrahl zumindest im Wesentlichen senkrecht zu einer Förderrichtung der Paletteneinheit wirkt. Dadurch kann vorteilhafterweise eine geschickte Anordnung des Sensorelementes getroffen werden, um einen möglichst großen Bereich mit einer geringen Anzahl an Sensorelementen, insbesondere mit nur einem Sensorelement, abzudecken. So kann durch eine senkrechte Anordnung beispielsweise nur ein Lichtstrahl je Detektionselement vorgesehen sein. Dabei kann die Sicherheitsvorrichtung derart anordbar sein, dass bei der schmalsten durch den Palettierer produzierbaren Paletteneinheit der beim Abtransport durch die Paletteneinheit entstehende Transportspalt in zwei Detektionsabstände bzw. Teilspalte halbiert ist, sodass dadurch die jeweiligen halben Spaltabstände unkritisch sein können. Somit kann es besonders vorteilhaft sein, wenn das Sensorelement derart an der Fördereinheit anordbar ist, dass der Lichtstrahl zumindest im Wesentlichen senkrecht zu einer Förderebene der Paletteneinheit wirkt. Unter der Förderebene kann dabei die Ebene verstanden werden, auf welcher die Paletteneinheit befördert wird und insbesondere zu welcher die Förderrichtung parallel wirkt oder ausgerichtet ist. Zusätzlich oder alternativ ist ebenfalls denkbar, dass das Sensorelement derart an der Fördereinheit anordbar ist, dass der Lichtstrahl zumindest im Wesentlichen senkrecht zu der Förderrichtung und parallel zu einer Förderebene der Paletteneinheit wirkt. Somit kann sich der Lichtstrahl insbesondere quer zur Förderrichtung erstrecken und damit vorteilhafterweise die gesamte Breite der Fördereinheit, welche durch die Paletteneinheit befahrbar ist, abdecken. Je nach Anordnung des Sensorelementes kann die Sicherheit, welche durch die Sicherheitsvorrichtung ermöglicht ist, an eine entsprechende Einsatzbedingung angepasst sein.

Es ist ferner denkbar, dass bei einer erfindungsgemäßen Sicherheitsvorrichtung das erste und das zweite Detektionselement jeweils einen Lichtvorhang aufspannen, der insbesondere senkrecht zur Förderrichtung der Paletteneinheit aufspannbar ist. Unter einem Lichtvorhang kann vorzugsweise eine regelmäßige oder unregelmäßige Anordnung mehrerer Lichtstrahlen verstanden werden. So kann beispielsweise durch die Lichtstrahlen ein Gitter aufgespannt werden. Das Gitter kann parallele oder sich kreuzende Lichtstrahlen aufweisen. Durch einen derartigen Lichtvorhang ist ein großer Bereich abdeckbar, in welchem Bewegungen bzw. Objekte detektierbar sind, insbesondere wobei eine Sicherheit dadurch erhöht ist und eine Umgehung der Sicherheitsvorrichtung erschwert ist.

Bei einer erfindungsgemäßen Sicherheitsvorrichtung ist ferner denkbar, dass die Detektionsvorrichtung einen Detektionsbereich aufweist, in welchem der unbefugte Zugang des Benutzers zur Fördereinheit feststellbar ist, wobei der Detektionsbereich einen Abstand zu einem Bodenbereich der Fördereinheit aufweist. Vorzugsweise kann der Abstand 0 mm bis 500 mm, besonders bevorzugt 250 mm bis 350 mm betragen. Somit kann beispielsweise ein optisches Sensorelement derart ausgebildet sein, dass ein Lichtstrahl des optischen Sensorelementes in dem Abstand oberhalb des Bodenbereiches endet oder zumindest derart an Intensität verliert, dass eine Reflexion innerhalb des Abstandes nicht als Detektionssignal gewertet wird. Dadurch können mögliche Fehlschaltungen aufgrund ungewollter Reflexionen im Bodenbereich der Fördereinheit vermieden werden oder zumindest reduziert werden.

Bei der erfindungsgemäßen Sicherheitsvorrichtung weist die Detektionsvorrichtung ein drittes und ein viertes Detektionselement auf, wobei das erste und zweite Detektionselement auf einer ersten Seite einer Förderrichtung der Fördereinheit und das dritte und vierte Detektionselement auf einer zweiten Seite der Förderrichtung anordbar sind. Bei dem Palettierer kann es von Vorteil sein, wenn der Abtransport der Paletteneinheit zumindest im Wesentlichen in einer Mitte der Fördereinheit erfolgt, sodass zu beiden Seiten der Fördereinheit die Paletteneinheit einen im Wesentlichen gleichen Abstand aufweist. Dadurch können verschiedene Breiten der Paletteneinheit auf einfache Art und Weise abtransportiert werden, insbesondere ohne dass komplexe Anpassungen der Fördereinheit notwendig sind. Auch ist dadurch eine geringere Toleranz beim Abtransport der Paletteneinheit entlang der Förderrichtung realisierbar und eine höhere Toleranz dadurch akzeptierbar, dass die Paletteneinheit zu beiden Seiten ausreichend Platz hat. Dabei kann das dritte Detektionselement gleich dem ersten Detektionselement ausgebildet sein und das vierte Detektionselement gleich dem zweiten Detektionselement. Insbesondere liegt die erste Seite der zweiten Seite gegenüber. Die definierte Breite der Paletteneinheit kann somit durch den Abstand zwischen dem ersten und dritten Detektionselement und/oder zwischen dem zweiten und vierten Detektionselement definiert sein. Das dritte und vierte Detektionselement bieten somit den Vorteil, dass der Transportspalt zwischen der Paletteneinheit und der Fördereinheit, insbesondere am Förderausgang der Fördereinheit, durch das dritte und vierte Detektionselement zumindest teilweise abgedeckt sein kann. Dadurch ist der Transportspalt weniger kritisch und somit die Sicherheit durch die Sicherheitsvorrichtung erhöht. Vorzugsweise können für jede der zwei Seiten der Förderrichtung lediglich zwei der Detektionselemente vorgesehen sein, so dass Kosten für weitere Detektionselemente eingespart werden können.

Zudem kann erfindungsgemäß vorgesehen sein, dass das erste und zweite Detektionselement verstellbar ausgebildet sind. Dadurch kann eine Anpassung eines kritischen Spaltes zwischen der Paletteneinheit beim Abtransport der Paletteneinheit und der Fördereinheit flexibel ausgestaltet sein. So können das erste und das zweite Detektionselement beispielsweise ein Sensorelement sein, welches in einer Schiene gelagert ist. Über einen Antrieb oder manuell können das erste und das zweite Detektionselement vorzugsweise parallel zu einem Bodenbereich der Fördereinheit verschiebbar sein.

Es ist des Weiteren vorteilhafterweise denkbar, dass bei einer erfindungsgemäßen Sicherheitsvorrichtung eine zusätzliche Überwachungsvorrichtung vorgesehen ist, sodass der unbefugte Zugang durch die Überwachungsvorrichtung, insbesondere zumindest bereichsweise redundant, erkennbar und der Palettierer abschaltbar ist. Ferner kann insbesondere vorgesehen sein, dass die Überwachungsvorrichtung deaktivierbar ist, wenn die Paletteneinheit die Überwachungsvorrichtung passiert. Dies hat den Vorteil, dass zusätzlich zur Detektionsvorrichtung, welche insbesondere Teilbereiche beim Abtransport von Paletteneinheiten sichert, die Überwachungsvorrichtung die Sicherheit erhöht, sodass auch Bereiche, welche nicht von der Detektionsvorrichtung abgedeckt sind, durch zumindest eine Überwachungsvorrichtung gedeckt sind. Somit kann vorzugsweise vorgesehen sein, dass durch die zusätzliche Überwachungsvorrichtung ein gesamter Querschnitt der Fördereinheit überwachbar ist. So kann es sich beispielsweise bei der Überwachungsvorrichtung um eine optische Vorrichtung handeln, welche einen Lichtvorhang oder ein bestimmtes Muster aus Lichtschranken oder Ähnlichem aufspannt. Wenn die Paletteneinheit die Überwachungsvorrichtung passiert, ist trotz einer möglichen Deaktivierung der Überwachungsvorrichtung die Sicherheit weiterhin durch die Detektionsvorrichtung gewährleistet. Damit bieten die Detektionsvorrichtung und die zusätzliche Überwachungsvorrichtung in Kombination eine besonders hohe, insbesondere teilweise redundante, Sicherheit gegenüber einem unbefugten Zugang eines Benutzers.

Im Rahmen der Erfindung ist ferner denkbar, dass die Sicherheitsvorrichtung für einen Palettierer zumindest ein Sicherheitselement aufweist, welches an der Fördereinheit des Palettierers anordenbar ist. Dabei kann die Sicherheit gegenüber einem unbefugten Zugang des Benutzers zur Fördereinheit durch das Sicherheitselement erhöhbar sein, wobei das Sicherheitselement zur Anpassung an eine Größe der Paletteneinheit zumindest in einen ersten Sicherheitszustand und in einen zweiten Sicherheitszustand bringbar sein kann. Unter der Größe der Paletteneinheit kann vorzugsweise die Höhe oder besonders bevorzugt eine insbesondere tatsächliche Breite der Paletteneinheit verstanden werden. Bei dem Sicherheitszustand kann es sich zum Beispiel um eine Sperrbreite handeln, wobei das Sicherheitselement einen bestimmten Bereich beim Abtransport der Paletteneinheit verdeckt. Zusätzlich oder alternativ kann es sich bei einer Anpassung des Sicherheitszustandes um ein Aktivieren oder Deaktivieren von Teilbereichen des Sicherheitselementes handeln.

Im Rahmen der Erfindung kann weiterhin vorgesehen sein, dass das Sicherheitselement mechanisch und/oder optisch wirkt. Unter einer mechanischen Wirkung kann dabei beispielsweise eine physische Sperrwirkung verstanden werden. Für eine derartige physische Sperrwirkung kann das Sicherheitselement beispielsweise eine Platte oder eine Tür aufweisen. Dies hat den Vorteil, dass das Sicherheitselement besonders robust und besonders einfach zu fertigen ist. Eine optische Wirkung des Sicherheitselementes kann beispielsweise dadurch erreicht werden, dass das Sicherheitselement einen Lichtstrahl und/oder eine Kamera umfasst. So kann beispielsweise der Palettierer bei Unterbrechung des Lichtstrahls oder bei Detektierung eines Benutzers in einem kritischen Bereich durch die Kamera ausgeschaltet werden, sodass von einer laufenden Maschine keine oder eine geringe Gefahr ausgeht. Dies hat den Vorteil, dass einzelne optische Bauteile beispielsweise besonders günstig sein können und einen geringen Bauraumbedarf erfordern. Ferner kann vorgesehen sein, dass das Sicherheitselement zumindest im ersten Sicherheitszustand und im zweiten Sicherheitszustand einen Lichtvorhang aufspannt, der insbesondere, bevorzugt senkrecht, zu einer Bewegungsrichtung der Paletteneinheit aufgespannt ist. So kann das Sicherheitselement vorzugsweise seitlich an der Fördereinheit bzw. an einem Förderausgang oder an einem Förderübergang der Fördereinheit des Palettierers anordenbar sein, sodass der Bauraumbedarf besonders gering ist. Gleichzeitig kann durch den Lichtvorhang eine besonders einfache und gleichzeitig umfangreiche Abdeckung des gewünschten Bereiches erfolgen und vom ersten in den zweiten Sicherheitszustand überführbar sein.

Es ist des Weiteren bei einer erfindungsgemäßen Sicherheitsvorrichtung denkbar, dass in einem Sicherheitszustand, insbesondere in zumindest zwei Sicherheitszuständen, ein Bereich zwischen der Fördereinheit und der Paletteneinheit durch das Sicherheitselement abgedeckt ist, wenn die Paletteneinheit das Sicherheitselement passiert. Dies stellt eine einfache Möglichkeit dar, unterschiedliche Sicherheitszustände zu realisieren, welche jeweils an die Größe der Paletteneinheit anpassbar sind oder angepasst sind.

Es ist ferner bei einer erfindungsgemäßen Sicherheitsvorrichtung denkbar, dass zumindest der erste und der zweite Sicherheitszustand jeweils unterschiedliche Positionen des Sicherheitselementes aufweisen. Somit kann eine Zustandsänderung beispielsweise durch ein Verschieben oder ein Verlängern des Sicherheitselementes erreicht werden. Dies hat den Vorteil, dass dieses beispielsweise besonders einfach auf mechanische Sicherheitselemente anwendbar ist und durch die Vielzahl der möglichen Antriebsmöglichkeiten eine hohe konstruktive Freiheit bei gleichzeitig geringhaltbaren Kosten ermöglicht. Bei einem optischen Sicherheitselement kann dies dazu führen, dass ein teilweises Deaktivieren nicht notwendig ist, so dass immer die gesamte Optik aktiv ist, jedoch je nach Position unterschiedliche Teilbereiche umfasst.

Gemäß einem weiteren Aspekt der Erfindung ist ein System mit einem Palettierer zum Palettieren eines Fördergutes und einer Sicherheitsvorrichtung beansprucht. Dabei weist die Sicherheitsvorrichtung eine Detektionsvorrichtung auf, die an einer Fördereinheit des Palettierers, welche zum Abtransport einer Paletteneinheit dient, angeordnet ist. Dabei ist die Detektionsvorrichtung derart ausgebildet, dass ein unbefugter Zugang eines Benutzers zur Fördereinheit in einem Transportspalt zwischen der Paletteneinheit und der Fördereinheit beim Abtransport der Paletteneinheit zumindest bis zu einer definierten Breite der Paletteneinheit detektierbar ist. Ferner ist die Detektionsvorrichtung derart ausgebildet, dass zumindest ab der definierten Breite der Paletteneinheit der Abtransport der Paletteneinheit detektierbar ist.

Insbesondere kann die Sicherheitsvorrichtung eine erfindungsgemäße Sicherheitsvorrichtung, wie zuvor beschrieben, sein. Unter einem Fördergut kann ein Produkt verstanden werden, welches auf einer Palette der Paletteneinheit gestapelt wird. So kann es sich bei dem Fördergut beispielsweise um Säcke oder Pakete handeln. Somit bringt ein erfindungsgemäßes System die gleichen Vorteile mit sich wie sie bereits ausführlich mit Bezug auf eine erfindungsgemäße Sicherheitsvorrichtung beschrieben worden sind.

Es kann bei einem erfindungsgemäßen System ferner vorgesehen sein, dass die Anordnung zumindest der Detektionsvorrichtung an der Fördereinheit derart auf eine, insbesondere tatsächliche, Breite der Paletteneinheit abgestimmt ist, dass ein Detektionsabstand zwischen dem ersten Detektionselement der Detektionsvorrichtung und der Paletteneinheit und/oder zwischen dem Detektionselement und der Fördereinheit < 500 mm, bevorzugt ≤ 230 mm, besonders bevorzugt ≤ 200 mm ist. Derartige Spaltwerte haben sich als besonders geeignet erwiesen, sodass beispielsweise ein menschlicher Körper oder auch einzelne Körperteile nicht oder nur unter großer Mühe des Benutzers durch den Transportspalt passen. Insbesondere können dabei gleichzeitig Unregelmäßigkeiten im Packstapel mitberücksichtigt sein, sodass die Sicherheit noch weiter gesteigert ist.

Es ist des Weiteren denkbar, dass bei einem erfindungsgemäßen System der Palettierer einen Schiebetisch, auf welchen das Fördergut aufbringbar ist, und eine Hubvorrichtung zum Stapeln des Fördergutes auf einer Palette zu einer Paletteneinheit, aufweist. So ist durch eine derartige Kombination von Hubvorrichtung und Schiebetisch eine besonders einfache Prozessfolge beim Palettieren möglich, sodass einzelne Lagen des Fördergutes zunächst auf den Schiebetisch bringbar sind und von dort auf die Hubvorrichtung. Für ein weiteres Stapeln des Fördergutes kann durch die Hubvorrichtung die Hubhöhe bzw. die Höhe der Aufnahme des Fördergutes anpassbar sein, sodass das Stapeln vom Schiebetisch weiterhin insbesondere beschädigungslos und einfach möglich ist.

Im Rahmen der Erfindung ist es ferner denkbar, dass die Hubvorrichtung unterhalb des Schiebetisches angeordnet ist und die Hubvorrichtung die Fördereinheit zum Abtransport der Paletteneinheit aufweist oder die Fördereinheit an der Hubvorrichtung zum Abtransport der Paletteneinheit angeordnet ist. Dies kann eine weitere Vereinfachung der Prozessfolge darstellen, da der Schiebetisch beispielsweise öffnen kann, um das Stapeln des Fördergutes auf der Hubvorrichtung bzw. einer Palette auf der Hubvorrichtung zu realisieren. Nach erfolgtem Stapeln des Fördergutes auf der Palette zu einer Paletteneinheit kann die Paletteneinheit durch die Fördereinheit zum nächsten Prozessschritt und/oder zum Ausgang des Palettierers oder der Fördereinheit überführt werden.

Im Rahmen der Erfindung ist es ferner denkbar, dass die Fördereinheit einen Rollenförderer und/oder ein Förderband aufweist. Diese stellen einfache Möglichkeiten dar, die Paletteneinheit zu befördern, ohne dass ein negativer Einfluss auf das gestapelte Fördergut genommen wird. So kann beispielsweise eine Kippgefahr der Paletteneinheit reduziert sein. Weiterhin sind der Rollenförderer bzw. der Förderband bauraum- und kostengünstig in das System integrierbar.

Es ist des Weiteren denkbar, dass bei einem erfindungsgemäßen System die Sicherheitsvorrichtung durch eine Steuereinheit des Palettierers angesteuert wird. Dies ermöglicht eine einfache Integration der digitalen Kommunikation der Sicherheitsvorrichtung in die digitale Kommunikation des Palettierers, insbesondere sodass keine zusätzliche Steuereinheit für die Sicherheitsvorrichtung notwendig ist. So können beispielsweise die notwendigen Steuerbefehle bzw. Algorithmen in die Steuerung des Palettierers integrierbar sein.

Gemäß einem weiteren Aspekt der Erfindung ist ein Verfahren zur Erhöhung einer Sicherheit einer Fördereinheit eines Palettierers beansprucht, wobei die Fördereinheit zum Abtransport von zumindest einer Paletteneinheit dient und eine Sicherheitsvorrichtung mit zumindest einer Detektionsvorrichtung aufweist. Dabei umfasst das Verfahren ferner folgenden Schritt:
- Betätigen der Detektionsvorrichtung, wobei eine Sicherungsfunktion ausgelöst wird, wenn ein unbefugter Zugang eines Benutzers von außen nach innen in die Fördereinheit detektiert wird und beim Abtransport der Paletteneinheit ab einer definierten Breite der Paletteneinheit der Abtransport der Paletteneinheit erkannt wird.

Vorzugsweise kann es sich bei der Sicherheitsvorrichtung um eine erfindungsgemäße Sicherheitsvorrichtung, wie zuvor beschrieben, handeln. Zum Betätigen der Detektionsvorrichtung kann es ausreichen, dass ein Teil der Detektionsvorrichtung beeinflusst wird, so dass beispielsweise ein Betätigungssignal generierbar ist. Somit bringt das erfindungsgemäße Verfahren die gleichen Vorteile mit sich wie sie ausführlich mit Bezug auf eine erfindungsgemäße Sicherheitsvorrichtung beschreiben worden sind.

Es ist ferner denkbar, dass bei einem erfindungsgemäßen Verfahren der unbefugte Zugang detektiert wird, wenn ein erstes Detektionselement der Detektionsvorrichtung vor einem zweiten Detektionselement der Detektionsvorrichtung betätigt wird. Durch geschickte Anordnung der Detektionselemente kann dadurch eine einfache Art und Weise geschaffen sein, den unbefugten Zugang zu detektieren.

Erfindungsgemäß kann ferner vorgesehen sein, dass das Betätigen des ersten und/oder zweiten Detektionselementes ein Unterbrechen eines Lichtstrahls umfasst. Dabei kann eine Reflexion des Lichtstrahles detektiert werden. Somit kann das erste und/oder das zweite Detektionselement ein optisches Sensorelement aufweisen, welches insbesondere ein Lichttaster ist. Dadurch ist eine einfache Möglichkeit gegeben, eine Bewegung und/oder ein Objekt zu detektieren, ohne dass beispielsweise ein zusätzliches Reflektorelement notwendig ist, sodass dieses auch nicht verschmutzen kann.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Zeichnungen hervorgehenden Merkmale und/oder Vorteile, einschließlich konstruktiver Einzelheiten, räumlicher Anordnungen und Verfahrensschritte, können sowohl für sich als auch in den verschiedensten Kombinationen erfindungswesentlich sein. Dabei ist zu beachten, dass die Figuren nur beschreibenden Charakter haben und nicht dazu gedacht sind, die Erfindung einzuschränken. Es zeigen:
- Fig. 1: eine Fördereinheit mit einer erfindungsgemäßen Sicherheitsvorrichtung in einem ersten Ausführungsbeispiel in perspektivischer schematischer Ansicht,
- Fig. 2: die Fördereinheit mit der erfindungsgemäßen Sicherheitsvorrichtung gemäß dem ersten Ausführungsbeispiel in schematischer Draufsicht,
- Fig. 3: die Fördereinheit mit der erfindungsgemäßen Sicherheitsvorrichtung gemäß dem ersten Ausführungsbeispiel in schematischer Seitenansicht,
- Fig. 4: eine Fördereinheit mit einer erfindungsgemäßen Sicherheitsvorrichtung in einem weiteren Ausführungsbeispiel in schematischer Seitenansicht,
- Fig. 5: eine Fördereinheit mit einer erfindungsgemäßen Sicherheitsvorrichtung in schematischer Draufsicht gemäß einem weiteren Ausführungsbeispiel,
- Fig. 6: eine Fördereinheit mit einer erfindungsgemäßen Sicherheitsvorrichtung gemäß einem weiteren Ausführungsbeispiel in schematischer Draufsicht,
- Fig. 7: eine Fördereinheit mit einer erfindungsgemäßen Sicherheitsvorrichtung gemäß einem weiteren Ausführungsbeispiel in schematischer Draufsicht,
- Fig. 8: eine Fördereinheit mit einer erfindungsgemäßen Sicherheitsvorrichtung gemäß einem weiteren Ausführungsbeispiel in schematischer Draufsicht,
- Fig. 9: ein Funktionsprinzip eines optischen Sensorelementes in einem weiteren Ausführungsbeispiel,
- Fig. 10: eine bevorzugte Ausführungsform eines Teils eines Palettierers bzw. einer Fördereinheit des Palettierers in einem weiteren Ausführungsbeispiel,
- Fig. 11: eine schematische Darstellung eines erfindungsgemäßen Verfahrens zur Erhöhung einer Sicherheit einer Fördereinheit.

In den nachfolgenden Fign. werden für die gleichen technischen Merkmale auch von unterschiedlichen Ausführungsbeispielen die identischen Bezugszeichen verwendet.

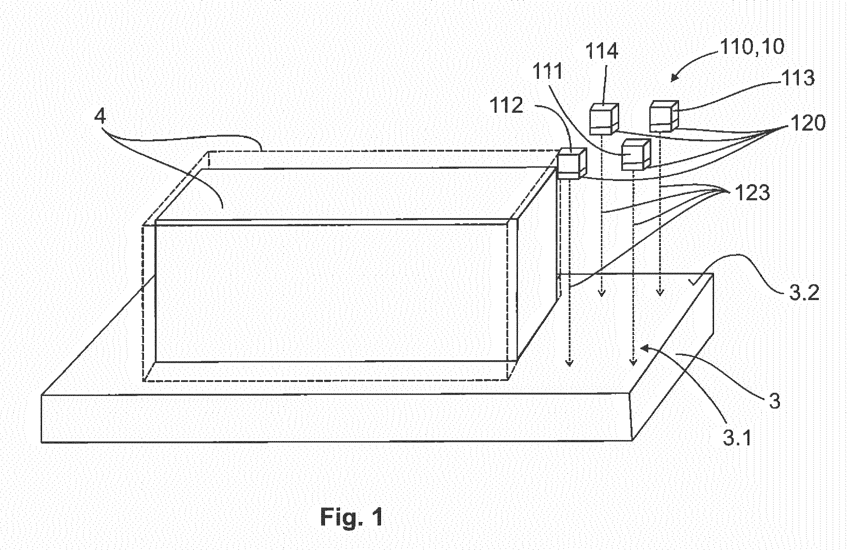

Die Figuren 1 bis 3 zeigen eine Fördereinheit 3, in welcher eine erfindungsgemäße Sicherheitsvorrichtung 10 gemäß einem ersten Ausführungsbeispiel angeordnet ist. Dabei ist ferner eine schmale Palette 4 (mit durchgezogenen Linien dargestellt) und eine breitere Paletteneinheit 4 (gestrichelt dargestellt) gezeigt. Die Paletteneinheiten 4 weisen eine Förderrichtung 41 auf, in welcher sie auf einer Förderebene 3.2 der Fördereinheit 3 abtransportiert werden. Dabei kann die Fördereinheit 3 beispielsweise Rollen aufweisen, welche in oder unterhalb der Förderebene 3.2 angeordnet sind, um die Paletteneinheiten 4 zu transportieren. An einem Förderausgang 3.1 der Fördereinheit 3 ist ferner die Sicherheitsvorrichtung 10 angeordnet. Die Sicherheitsvorrichtung 10 umfasst eine Detektionsvorrichtung 110 mit vier Detektionselementen 111, 112, 113, 114, wobei ein zweites und ein viertes Detektionselement 112, 114 in Förderrichtung 41 der Paletteneinheiten 4 vor einem ersten und einem dritten Detektionselement 111, 113 angeordnet sind. Die Detektionsvorrichtung 110 ist derart ausgebildet, dass ein unbefugter Zugang eines Benutzers 50 zur Fördereinheit 3 in einem Transportspalt 42 zwischen der Paletteneinheit 4 und der Fördereinheit 3 beim Abtransport der Paletteneinheit 4 zumindest bis zu einer definierten Breite 4.3 der Paletteneinheit 4 detektierbar, und zumindest ab der definierten Breite 4.3 der Paletteneinheit 4 der Abtransport der Paletteneinheit 4 detektierbar ist. Das erste und das zweite Detektionselement 111, 112 sind dabei auf einer ersten Seite 41.1 der Förderrichtung 41 am Förderausgang 3.1 der Fördereinheit 3 vorgesehen und das dritte und das vierte Detektionselement 113, 114 sind an einer zweiten Seite 41.2 der Förderrichtung 41 vorgesehen, wobei die zweite Seite 41.2 in Bezug auf die Förderrichtung 41 gegenüberliegend der ersten Seite 41.1 ist.

Jedes der Detektionselemente 111, 112, 113, 114 weist ferner ein Sensorelement 120 auf, welches als optisches Sensorelement ausgebildet ist, um einen Lichtstrahl 123, insbesondere senkrecht zur Förderebene 3.2, auszusenden, sodass ein Detektionsbereich 110.1 entsteht, in welchem eine Bewegung der Paletteneinheiten 4 und/oder des Benutzers 50 detektierbar ist. Dabei sind die Sensorelemente 120 derart ausgebildet, dass der Detektionsbereich 110.1 oberhalb eines Bodenbereichs 3.3 der Fördereinheit 3, welcher auch die Förderebene 3.2 bildet, in einem Abstand 110.2 endet. Der Abstand kann vorzugsweise 0 mm bis 500 mm, besonders bevorzugt 250 mm bis 350 mm betragen. Dadurch ist eine Beeinflussung der optischen Sensorelemente 120 durch Schmutz und weitere Reflexionen im Bodenbereich 3.3 der Fördereinheit 3 reduziert.

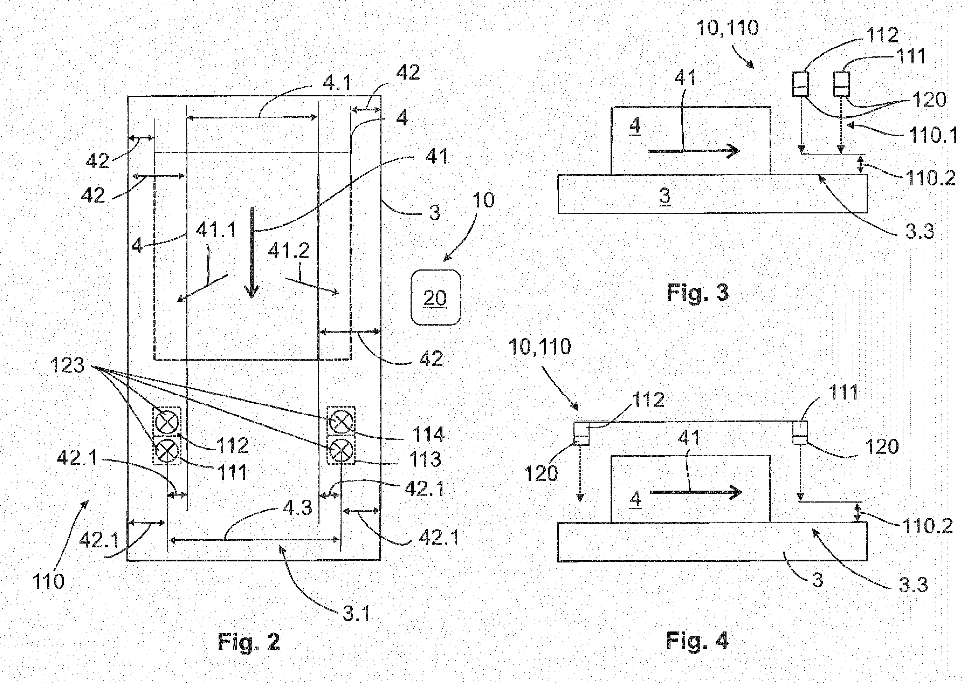

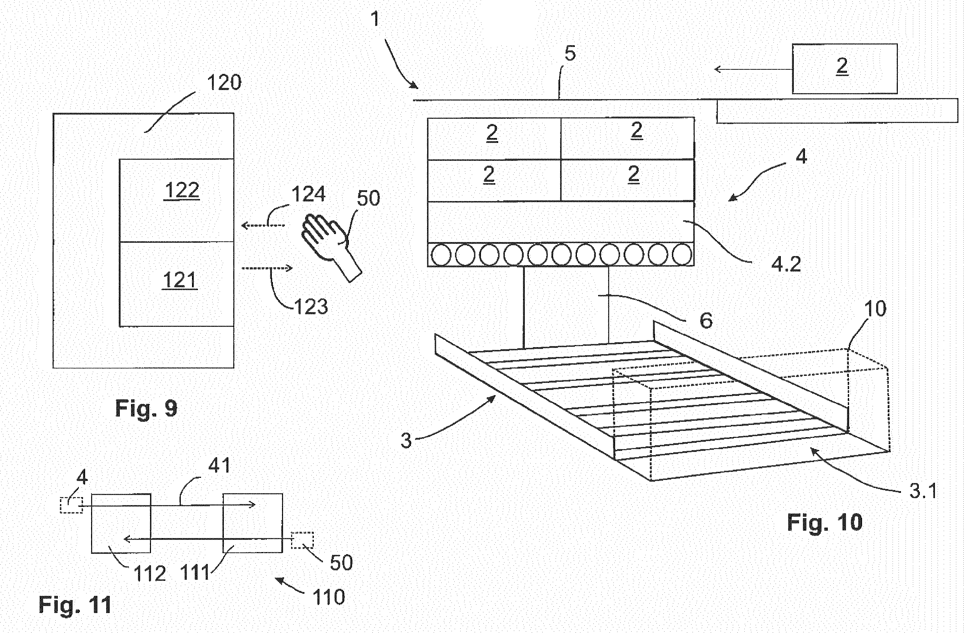

Der Detektionsbereich 110.1 ist ferner durch jeweils zumindest einen Lichtstrahl der optischen Sensorelemente 120 definiert. Insbesondere sind die optischen Sensorelemente 120 gemäß dem in Fig. 9 dargestellten Ausführungsbeispiel ausgebildet. Alternativ oder zusätzlich kann das Sensorelement 120 z.B. als kapazitives Sensorelement ausgebildet sein. Wie in Fig. 2 dargestellt, weist die Sicherheitsvorrichtung 10 ferner eine Steuereinheit 20 auf, die mit den Detektionselementen 111, 112, 113, 114 in Kommunikationsverbindung steht. Durch die Steuereinheit 20 kann eine Sicherungsfunktion ausgelöst werden, welche ein teilweises Abschalten eines Palettierers 1 umfassen kann. Die Sicherungsfunktion wird insbesondere dann ausgelöst, wenn das erste und/oder das dritte Detektionselement 111, 113 vor dem zweiten und/oder vierten Detektionselement 112, 114 betätigt werden. Dies deutet auf eine Bewegung eines Objektes, insbesondere des Benutzers 50, von außen nach innen in die Fördereinheit 3 hin.

Ferner sind die Detektionselemente 111, 112, 113, 114 derart angeordnet, dass eine schmale Paletteneinheit 4, welche unterhalb der definierten Breite 4.3 der Paletteneinheit 4 liegt, die Sicherheitsvorrichtung 10 nicht beeinflusst. In diesem Ausführungsbeispiel entspricht die definierte Breite 4.3 der Paletteneinheit 4 somit dem Abstand zwischen dem Erkennungsbereich 110.1 des ersten und dritten Detektionselement 111, 113 bzw. des zweiten und vierten Detektionselement 112, 114, da eine schmalere Paletteneinheit 4 zwischen Lichtstrahlen 123 der Detektionselemente 111, 112, 113, 114, die einen Detektionsabstand 42.1 zwischen der Paletteneinheit 4 bzw. der Fördereinheit 3 und den Detektionselementen 111, 112, 113, 114 definieren, hindurchtransportiert werden kann. Dabei ist schematisch der Mittelpunkt der Lichtstrahlen 123 zur Veranschaulichung der definierten Breite 4.3 bzw. des Detektionsabstandes 42.1 ausgewählt. Je nach Ausbreitungsumfang der Lichtstrahlen 123 kann hier jedoch auch eine Breite des Erkennungsbereiches 110.1 vom Transportspalt 42 bzw. vom Detektionsabstand 42.1 ausgeschlossen sein. Die Anordnung zumindest der Detektionsvorrichtung (110) an der Fördereinheit 3 ist derart auf die Breite 4.1 der Paletteneinheit (4) abgestimmt, dass zumindest einer, bevorzugt alle, der Detektionsabstände 42.1 kleiner 500 mm, bevorzugt kleiner oder gleich 230 mm, besonders bevorzugt kleiner oder gleich 200 mm ist/sind. Liegt die Breite 4.1 der Paletteneinheit 4 über der definierten Breite 4.3 der Paletteneinheit 4, wird zunächst der Lichtstrahl 123 des zweiten und/oder des vierten Detektionselementes 112, 114 unterbrochen und anschließend der Lichtstrahl 123 des ersten und/oder dritten Detektionselementes 111, 113, da sich die Paletteneinheit 4 entlang der Förderrichtung 41 bewegt. Gemäß dieser Reihenfolge des Auslösens der Detektionselemente 111, 112, 113, 114 kann dadurch der Abtransport der Paletteneinheit 4 detektiert bzw. erkannt werden, sodass das Auslösen der Sicherungsfunktion nicht notwendig ist. Insbesondere kann erforderlich sein, dass für das Auslösen der Sicherungsfunktion zuerst der Lichtstrahl 123 des ersten Detektionselementes 111 und daraufhin bei weiterhin unterbrochenem Lichtstrahl 123 des ersten Detektionselementes 111 der Lichtstrahl 123 des zweiten Detektionselementes 112 unterbrochen wird, wobei ein analoger Ablauf für die weiteren Detektionselemente 113, 114 denkbar ist. Zusätzlich oder alternativ kann für die Detektion des Abtransports der Paletteneinheit 4 erforderlich sein, dass jeweils zumindest zwei Detektionselemente 112, 113, 114, 111 ausgelöst werden, wobei jeweils das erste und das zweite Detektionselement 111, 112 bzw. das dritte und vierte Detektionselement 113, 114 gleichzeitig ausgelöst werden.

Fig. 4 zeigt eine Fördereinheit 3 mit einer erfindungsgemäßen Sicherheitsvorrichtung 10 in einem weiteren Ausführungsbeispiel in schematischer Seitenansicht. Dabei weist die Sicherheitsvorrichtung 10, wie auch das erste Ausführungsbeispiel, eine Detektionsvorrichtung 110 mit einem ersten und einem zweiten Detektionselement 111, 112 auf, welche dazu ausgebildet sind, mittels eines optischen Sensorelementes 120, das beispielsweise gemäß dem Ausführungsbeispiel in Fig. 9 ausgestaltet sein kann, einen Lichtstrahl 123 zu erzeugen, der oberhalb eines Abstandes 110.2 zu einem Bodenbereich 3.3 der Fördereinheit 3 endet. Dabei sind die Detektionselemente 111, 112 entlang einer Förderrichtung 41 einer Paletteneinheit 4, die durch die Fördereinheit 3 transportiert wird, an der Fördereinheit 3 angeordnet. Die Anordnung ist jedoch derart vorgesehen, dass zwischen den Detektionselementen 111, 112 eine Paletteneinheit 4 sich befinden kann, ohne die Detektionselemente 111, 112 auszulösen. Daher kann es von Vorteil sein, wenn ein Erkennen eines Abtransports einer Paletteneinheit 4 ab einer bestimmten Breite 4.3 der Paletteneinheit 4 dann durchgeführt wird, wenn das erste Detektionselement 111 in einem bestimmten Zeitintervall nach dem zweiten Detektionselement 112 betätigt wird. Dieses Zeitintervall kann durch eine Steuereinheit 20 vorgegeben sein, welche mit den Detektionselementen 111, 112 in kabelgebundener oder drahtloser Kommunikationsverbindung steht. Insbesondere können die Detektionselemente 111, 112 entlang der Förderrichtung 41 oder senkrecht zur Förderrichtung 41 verstellbar sein, so dass beispielsweise die definierte Breite 4.3 auch nach der Montage der Sicherheitsvorrichtung 10 n der Fördereinheit 3 noch anpassbar ist oder die Sicherung des Transportspaltes 42 innerhalb der Fördereinheit 3 längs der Förderrichtung 41 verlagerbar ist.

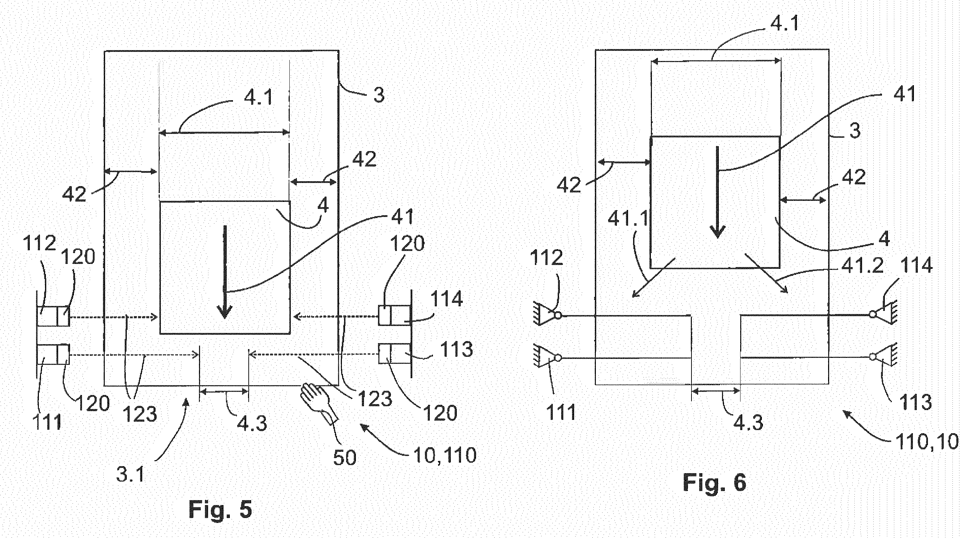

Fig. 5 zeigt eine Fördereinheit 3 mit einer Sicherheitsvorrichtung 10 aufweisend eine Detektionsvorrichtung 110 gemäß einem weiteren Ausführungsbeispiel in schematischer Draufsicht. Dabei ist die Funktionsweise der Sicherheitsvorrichtung 10 zur Detektierung eines Abtransports einer Paletteneinheit 4 oder eines unbefugten Zugangs eines Benutzers 50 von außen nach innen in die Fördereinheit 3 wie die des ersten Ausführungsbeispiels. Im Ausführungsbeispiel der Fig. 5 sind Detektionselemente 111, 112, 113, 114 jedoch nicht wie im ersten Ausführungsbeispiel senkrecht zu einer Förderebene 3.2 der Paletteneinheit 4 ausgerichtet, sondern parallel. Dadurch ergibt sich eine geringe Breite 4.3 der Paletteneinheit 4, ab welcher der Abtransport der Paletteneinheit 4 detektierbar ist. Ferner ist ein großer Teil eines Seitenbereichs eines Förderausgangs 3.1 der Fördereinheit 3 durch die Detektionsvorrichtung 110 in Querrichtung abgedeckt, sodass ein Transportspalt 42 zwischen der Paletteneinheit 4 und der Fördereinheit 3 in seitlicher Richtung zumindest bereichsweise nahezu vollständig überwachbar ist. Im hier dargestellten Zeitpunkt des Abtransports der Paletteneinheit 4 betätigt die Paletteneinheit 4 beim Abtransport das zweite und vierte Detektionselement 112, 114 durch Unterbrechen von Lichtstrahlen 123. Im weiteren Verlauf des Abtransports der Paletteneinheit 4 entlang einer Förderrichtung 41 wird die Paletteneinheit 4 somit auch das erste und dritte Detektionselement 111, 113 betätigen, so dass z.B. durch eine Steuereinheit 20 der Abtransport der Paletteneinheit als solcher erkennbar ist. Eine umgekehrte Betätigung der Detektionselemente 111, 112, 113, 114 bei einem Versuch des Benutzers 50 durch den Transportspalt 42 kann dementsprechend zu einer Detektion eines unbefugten Zugangs führen.

Fig. 6 zeigt eine Fördereinheit 3 beim Abtransport einer Paletteneinheit 4 entlang einer Förderrichtung 41. Dabei ist eine Sicherheitsvorrichtung 10 an der Fördereinheit 3 angeordnet, wobei die Anordnung und prinzipielle Funktionsweise der Sicherheitsvorrichtung 10 des Ausführungsbeispiels der Fig. 5 bzw. des ersten Ausführungsbeispiels entspricht. Im Unterschied zu den vorhergegangenen Ausführungsbeispielen funktionieren die Detektionselemente 111, 112, 113, 114 der Detektionsvorrichtung 110 des Ausführungsbeispiels der Fig. 6 jedoch mechanisch, wobei diese als schwenkbare Klappen ausgebildet sind, die in beide Richtungen betätigbar sind. Wird nun das zweite und/oder vierte Detektionselement 112, 114 vor dem ersten bzw. dritten Detektionselement 111, 113 betätigt, kann ab einer definierten Breite 4.3 der Paletteneinheit 4 der Abtransport der Paletteneinheit 4 detektiert werden, während ein Auslösen des ersten Detektionselementes 111 bzw. des dritten Detektionselementes 113 vor dem zweiten bzw. vierten Detektionselement 112, 114 als unbefugter Zugang gewertet wird und damit eine Sicherungsfunktion wie beispielsweise das Abschalten eines Palettierers 1 auslöst. Liegt der die tatsächliche Breite 4.1 der Paletteneinheit 4 unterhalb der definierten Breite 4.3, wird die Detektionsvorrichtung 110 nicht ausgelöst und die Paletteneinheit 4 kann einen Förderausgang 3.1 der Fördereinheit 3 passieren, wobei gleichzeitig eine Sicherheit gegenüber einem unbefugten Zugang durch einen Transportspalt 42 zwischen der Paletteneinheit 4 und der Fördereinheit 3 durch die Detektionsvorrichtung 110 erhalten bleibt.

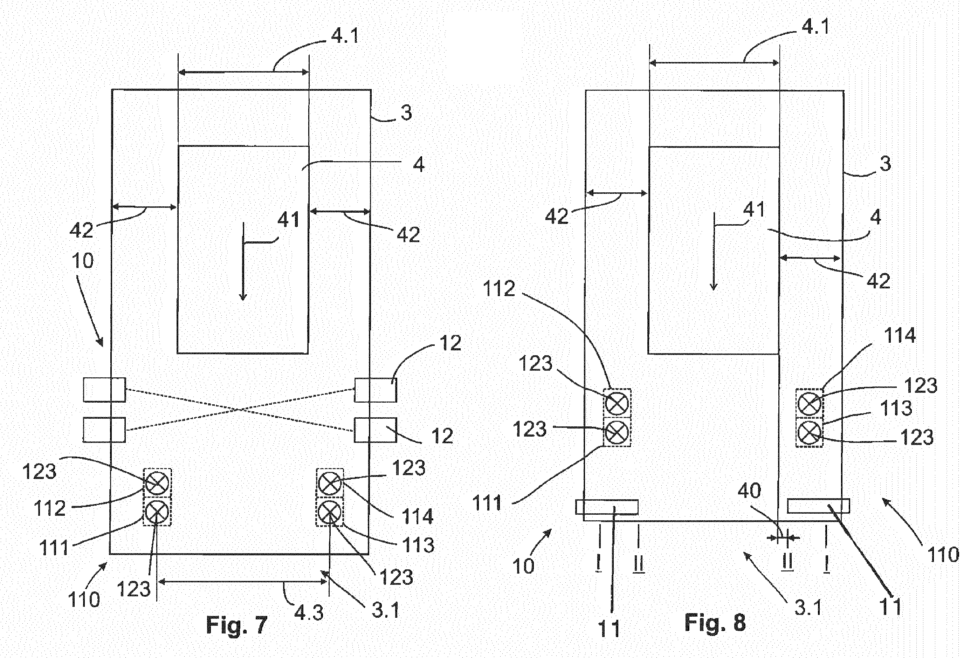

Fig. 7 zeigt ferner eine Fördereinheit 3 mit einer Sicherheitsvorrichtung 10. Dabei weist die Sicherheitsvorrichtung 10 insbesondere eine Detektionsvorrichtung 110 gemäß dem Ausführungsbeispiel der Figuren 1 bis 3 auf. Zusätzlich zur Detektionsvorrichtung 110 weist die Sicherheitsvorrichtung 10 des Ausführungsbeispiels der Fig. 7 jedoch eine Überwachungsvorrichtung 12 auf, welche eine Lichtschranke, vorzugsweise eine gekreuzte Lichtschranke, umfasst. Dabei ist die Überwachungsvorrichtung 12 in Förderrichtung 41 der Paletteneinheit 4 vor der Detektionsvorrichtung 110 angeordnet. Die Überwachungsvorrichtung 12 bietet dabei den Vorteil, dass, wenn auch keine Paletteneinheit 4 abtransportiert wird, der gesamte Bereich quer zur Förderrichtung 41 überwachbar ist, sodass beim Auslösen, vorzugsweise durch Unterbrechen eines Lichtstrahls, der Überwachungsvorrichtung 12, wie durch die Detektionsvorrichtung 110, eine Sicherungsfunktion auslösbar ist. Werden durch die Paletteneinheit 4 beim Abtransport mehrere Lichtstrahlen der Überwachungsvorrichtung 12, insbesondere zwei Lichtstrahlen, gleichzeitig oder innerhalb eines definierten Zeitintervalls unterbrochen, so ist auch durch die Überwachungsvorrichtung 12 der Abtransport der Paletteneinheit 4 detektierbar, sodass die Sicherungsfunktion nicht auslöst.

Fig. 8 zeigt ferner eine Fördereinheit 3, bei welcher auf einer Förderebene 3.2 entlang einer Förderrichtung 41 eine Paletteneinheit 4 abtransportiert wird. An der Fördereinheit 3 ist ferner eine Detektionsvorrichtung 110 der Sicherheitsvorrichtung 10 angeordnet, wobei durch zwei Detektionselemente 111, 112 Lichtstrahlen 123 senkrecht zur Förderebene 3.2 der Fördereinheit 3 aussendbar sind. Wie in den vorangegangenen Ausführungsbeispielen wird der Abtransport der Paletteneinheit 4 detektiert, wenn das erste Detektionselement 111 nach dem zweiten Detektionselement 112 ausgelöst wird, und ein unbefugter Zugang eines Benutzers 50 wird detektiert, wenn das erste Detektionselement 111 vor dem zweiten Detektionselement 112 ausgelöst wird. In diesem Fall ist die Detektionsvorrichtung 110 innerhalb der Fördereinheit 3 angeordnet, sodass der innere Bereich der Fördereinheit 3 durch die Detektionsvorrichtung 110 überwachbar ist. Ferner sind an den Seiten eines Förderausgangs 3.1 der Fördereinheit 3 Sicherheitselemente 11 vorgesehen, die vorzugsweise als mechanisch verschiebbare Türen ausgebildet sein können. Dabei sind die Sicherheitselemente 11 ferner dazu ausgebildet, zumindest zwei Sicherheitszustände I, II anzunehmen, sodass ein Spalt 40 zwischen den Sicherheitselementen 11 und der Paletteneinheit 4 bei der Ausfahrt gering ist und gleichzeitig durch die Verschiebbarkeit der Sicherheitselemente 11 eine Breite 4.1 der Paletteneinheit 4 berücksichtigbar ist. Insbesondere können die Sicherheitselemente 11 zusätzlich oder alternativ einen Lichtvorhang aufweisen, der in die Sicherheitszustände I, II überführbar ist. Durch eine Kombination der Sicherheitselemente 11 und der Detektionsvorrichtung 10 kann z.B. eine redundante Sicherung des Förderausgangs 3.1 geschaffen werden und/oder der Transportspalt 42 auch in einer Richtung parallel zur Förderrichtung 41 weiter gesichert werden.

Fig. 9 zeigt ein optisches Sensorelement 120 zur Detektion einer Bewegung oder eines Objektes. Dazu weist das optische Sensorelement 120 ein Lichtabgabemodul 121 zur Abgabe eines Lichtstrahls 123 auf. Wird der Lichtstrahl 123 durch den Benutzer 50 oder eine Paletteneinheit 4 reflektiert, entsteht eine Reflexion 124 des Lichtstrahls 123 und wird von einem Lichtaufnahmemodul 122 des optischen Sensorelementes 120 detektiert. Dadurch kann festgestellt werden, dass der Lichtstrahl 123 unterbrochen wurde.

Fig. 10 zeigt einen Palettierer 1 mit einer Fördereinheit 3 in einem weiteren Ausführungsbeispiel. Dabei ist durch den Palettierer 1 ein Fördergut 2 auf einen Schiebetisch 5 transportierbar, unter welchem eine Paletteneinheit 4 mit einer Palette 2 dadurch gebildet wird, dass Fördergüter 2 gestapelt werden. Ferner ist eine Hubvorrichtung 6 vorgesehen, die unterhalb des Schiebetisches 5 angeordnet ist, sodass die Paletteneinheit 4 absenkbar ist. Über eine Rollenbahn der Fördereinheit 3 kann eine Paletteneinheit 4 ferner zu einem Förderausgang 3.1 abtransportiert werden, wobei am Förderausgang 3.1 eine erfindungsgemäße Sicherheitsvorrichtung 10 angeordnet ist. Diese ist hier lediglich schematisch dargestellt. Vorzugsweise sind jedoch Sicherheitsvorrichtungen gemäß der vorangegangenen Ausführungsbeispiele für den Palettierer 1 verwendbar.

Figur 11 zeigt eine schematische Ansicht eines erfindungsgemäßen Verfahrens zur Erhöhung einer Sicherheit einer Fördereinheit 3 eines Palettierers 1. Bewegt sich eine Paletteneinheit 4 entlang einer Förderrichtung 41 durch einen Detektionsbereich 110.1 einer Detektionsvorrichtung 110, die eine Detektionsvorrichtung nach einem der vorhergenannten Ausführungsbeispiele sein kann, entlang einer Förderrichtung 41 der Paletteneinheit 4 derart, dass die Paletteneinheit zunächst ein zweite Detektionselement 112 der Detektionsvorrichtung 110 und dann ein erstes Detektionselement 111 der Detektionsvorrichtung 110 betätigt, wird ein Abtransport der Paletteneinheit 4 festgestellt. Versucht ein Benutzer 50 durch einen Transportspalt 42, insbesondere neben der Paletteneinheit 4, entgegengesetzt zur Förderrichtung 41 der Paletteneinheit 4 in die Fördereinheit 3 einzudringen, betätigt er zunächst das erste Detektionselement 111 und dann das zweite Detektionselement 112. In diesem Fall wird eine Sicherungsfunktion, wie ein Abschalten der Fördereinheit 3 und/oder des Palettierers 1 durchgeführt.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Palettierer
- 3: Fördereinheit
- 3.1: Förderausgang
- 3.2: Bodenbereich von 3
- 4: Paletteneinheit
- 4.1: Breite von 4
- 4.3: definierte Breite von 4
- 5: Schiebetisch
- 6: Hubvorrichtung

- 10: Sicherheitsvorrichtung
- 11: Sicherheitselement
- 12: Überwachungsvorrichtung

- 20: Steuereinheit

- 40: Spalt
- 41: Förderrichtung
- 41.1: erste Seite von 41
- 41.2: zweite Seite von 41
- 42: Transportspalt
- 42.1: Detektionsabstand

- 50: Benutzer

- 110: Detektionsvorrichtung
- 110.1: Detektionsbereich
- 111: erstes Detektionselement
- 112: zweites Detektionselement
- 113: drittes Detektionselement
- 114: viertes Detektionselement

- 120: Sensorelement
- 121: Lichtabgabemodul
- 122: Lichtaufnahmemodul
- 123: Lichtstrahl
- 124: Reflexion

- I: erster Sicherheitszustand
- II: zweiter Sicherheitszustand

## Patentansprüche

1. Sicherheitsvorrichtung (10) für einen Palettierer (1), aufweisend
eine Detektionsvorrichtung (110), die an einer Fördereinheit (3) des Palettierers (1), welche zum Abtransport einer Platteneinheit (4) dient, anordbar ist,
wobei die Detektionsvorrichtung (110) derart ausgebildet ist, dass ein unbefugter Zugang eines Benutzers (50) zur Fördereinheit (3) in einem Transportspalt (42) zwischen der Paletteneinheit (4) und der Fördereinheit (3) beim Abtransport der Paletteneinheit (4) zumindest bis zu einer definierten Breite (4.3) der Paletteneinheit (4) detektierbar, und zumindest ab der definierten Breite (4.3) der Paletteneinheit (4) der Abtransport der Paletteneinheit (4) detektierbar ist, wobei die Detektionsvorrichtung (110) ein erstes und ein zweites Detektionselement (111, 112) umfasst, wobei das erste und das zweite Detektionselement (111, 112) jeweils durch die Paletteneinheit (4) ab der definierte Breite (4.3) und/oder durch den unbefugten Zugang betätigbar ist, wodurch eine Sicherungsfunktion auslösbar ist, wenn das erste Detektionselement (111) vor dem zweiten Detektionselement (112) betätigt wird, **dadurch gekennzeichnet, dass** die Detektionsvorrichtung (110) ein drittes und ein viertes Detektionselement (113, 114) aufweist, wobei das erste und zweite Detektionselement (111, 112) auf einer ersten Seite (41.1) einer Förderrichtung (41) der Fördereinheit (3) und das dritte und vierte Detektionselement (113, 114) auf einer zweiten Seite (41.2) der Förderrichtung (41) anordbar sind.

2. Sicherheitsvorrichtung (10) nach Anspruch 1,
**dadurch gekennzeichnet,**
**dass** das erste und das zweite Detektionselement (111, 112) mit einer Steuereinheit (20) zum Auslösen der Sicherungsfunktion in Kommunikationsverbindung bringbar sind, insbesondere wobei die Sicherungsfunktion ein Auslösen eines Signals zum zumindest teilweisen Abschalten des Palettierers (1) umfasst.

3. Sicherheitsvorrichtung (10) nach einem der vorhergehenden Ansprüche,
**dadurch gekennzeichnet,**
**dass** das erste und/oder das zweite Detektionselement (111, 112) ein insbesondere optisches Sensorelement (120) aufweist.

4. Sicherheitsvorrichtung (10) nach einem der vorhergehenden Ansprüche,
**dadurch gekennzeichnet,**
**dass** das Sensorelement (120) ein Lichtabgabemodul (121) aufweist, durch welches zumindest ein Lichtstrahl (123) aussendbar ist, insbesondere wobei das Sensorelement (120) ein Lichtaufnahmemodul (122) zur Detektion einer Reflexion (124) des Lichtstrahls (123) durch den Benutzer (50) aufweist.

5. Sicherheitsvorrichtung (10) nach einem der vorhergehenden Ansprüche,
**dadurch gekennzeichnet,**
**dass** das Sensorelement (120) derart an der Fördereinheit (3) anordbar ist, dass der Lichtstrahl (123) zumindest im Wesentlichen senkrecht zu einer Förderrichtung (41) der Paletteneinheit (4) wirkt oder dass das erste und das zweite Detektionselement (111, 112) jeweils einen Lichtvorhang aufspannen, der insbesondere, bevorzugt senkrecht, zu der Förderrichtung (41) der Paletteneinheit (4) aufspannbar ist.

6. Sicherheitsvorrichtung (10) nach einem der vorhergehenden Ansprüche,
**dadurch gekennzeichnet,**
**dass** die Detektionsvorrichtung (110) einen Detektionsbereich (110.1) aufweist, in welchem ein unbefugter Zugang des Benutzers (50) zur Fördereinheit (3) feststellbar ist, wobei der Detektionsbereich (110.1) einen Abstand (110.2) zu einem Bodenbereich (3.1) der Fördereinheit (3) aufweist.

7. Sicherheitsvorrichtung (10) nach einem der vorhergehenden Ansprüche,
**dadurch gekennzeichnet,**
**dass** das erste und zweite Detektionselement (111, 112) verstellbar ausgebildet sind.

8. Sicherheitsvorrichtung (10) nach einem der vorhergehenden Ansprüche,
**dadurch gekennzeichnet,**
**dass** eine zusätzliche Überwachungsvorrichtung (12) vorgesehen ist, so dass der unbefugte Zugang durch die Überwachungsvorrichtung (12) erkennbar und der Palettierer (1) abschaltbar ist, und insbesondere dass die Überwachungsvorrichtung (12) deaktivierbar ist, wenn die Paletteneinheit (4) die Überwachungsvorrichtung (12) passiert.

9. System mit einem Palettierer (1) zum Palettieren eines Fördergutes (2) und
einer Sicherheitsvorrichtung (10), insbesondere nach einem der Ansprüche 1 bis 10, wobei die Sicherheitsvorrichtung (10) eine Detektionsvorrichtung (110) aufweist, die an einer Fördereinheit (3) des Palettierers, welche zum Abtransport einer Platteneinheit (4) dient, angeordnet ist,
wobei die Detektionsvorrichtung (110) derart ausgebildet ist, dass ein unbefugter Zugang eines Benutzers (50) zur Fördereinheit (3) in einem Transportspalt (42) zwischen der Paletteneinheit (4) und der Fördereinheit (3) beim Abtransport der Paletteneinheit (4) zumindest bis zu einer definierten Breite (4.3) der Paletteneinheit (4) detektierbar, und zumindest ab der definierten Breite (4.3) der Paletteneinheit (4) der Abtransport der Paletteneinheit (4) detektierbar ist, wobei die Detektionsvorrichtung (110) ein erstes und ein zweites Detektionselement (111, 112) umfasst, wobei das erste und das zweite Detektionselement (111, 112) jeweils durch die Paletteneinheit (4) ab der definierte Breite (4.3) und/oder durch den unbefugten Zugang betätigbar ist, wodurch eine Sicherungsfunktion auslösbar ist, wenn das erste Detektionselement (111) vor dem zweiten Detektionselement (112) betätigt wird, **dadurch gekennzeichnet, dass** die Detektionsvorrichtung (110) ein drittes und ein viertes Detektionselement (113, 114) aufweist, wobei das erste und zweite Detektionselement (111, 112) auf einer ersten Seite (41.1) einer Förderrichtung (41) der Fördereinheit (3) und das dritte und vierte Detektionselement (113, 114) auf einer zweiten Seite (41.2) der Förderrichtung (41) anordbar sind.

10. System nach Anspruch 9,
**dadurch gekennzeichnet,**
**dass** die Anordnung zumindest der Detektionsvorrichtung (110) an der Fördereinheit (3) derart auf eine Breite (4.1) der Paletteneinheit (4) abgestimmt ist, dass ein Detektionsabstand (42.1) zwischen dem ersten Detektionselement (111) der Detektionsvorrichtung (110) und der Paletteneinheit (4) und/oder zwischen dem ersten Detektionselement (111) und der Fördereinheit (3) kleiner 500 mm, bevorzugt kleiner oder gleich 230 mm, besonders bevorzugt kleiner oder gleich 200 mm, ist.

11. System nach Anspruch 9 oder 10,
**dadurch gekennzeichnet,**
**dass** der Palettierer (1) einen Schiebetisch (5), auf welchen das Fördergut (2) aufbringbar ist, und eine Hubvorrichtung (6) zum Stapeln des Fördergutes (2) auf einer Palette (4.2) zu einer Paletteneinheit (4), aufweist, insbesondere wobei die Hubvorrichtung (6) unterhalb des Schiebetisches (5) angeordnet ist und die Hubvorrichtung (6) die Fördereinheit (3) zum Abtransport der Paletteneinheit (4) aufweist oder die Fördereinheit (3) an der Hubvorrichtung (6) zum Abtransport der Paletteneinheit (4) angeordnet ist.

12. Verfahren zur Erhöhung einer Sicherheit einer Fördereinheit (3) eines Palettierers (1), die zum Abtransport von zumindest einer Paletteneinheit (4) dient, und eine Sicherheitsvorrichtung (10) nach einem der Ansprüche 1 bis 8 mit einer Detektionsvorrichtung (110) aufweist,
wobei das Verfahren folgenden Schritt umfasst:
- Betätigen der Detektionsvorrichtung (110), wobei eine Sicherungsfunktion auslöst, wenn ein unbefugter Zugang eines Benutzers (50) zur Fördereinheit (3) in einem Transportspalt (42) zwischen der Paletteneinheit (4) und der Fördereinheit (3) beim Abtransport der Paletteneinheit (4) zumindest bis zu einer definierten Breite (4.3) der Paletteneinheit (4) detektiert wird, und zumindest ab der definierten Breite (4.3) der Paletteneinheit (4) der Abtransport der Paletteneinheit (4) detektiert wird.

13. Verfahren nach Anspruch 12,
**dadurch gekennzeichnet,**
**dass** das der unbefugte Zugang detektiert wird, wenn ein erstes Detektionselement (111) der Detektionsvorrichtung (110) vor einem zweiten Detektionselement (112) der Detektionsvorrichtung (110) betätigt wird oder dass das Betätigen des ersten und/oder zweiten Detektionselementes (111, 112) ein Unterbrechen eines Lichtstrahls (123) umfasst, insbesondere wobei eine Reflexion (124) des Lichtstrahls (123) detektiert wird.

## Claims

1. A safety device (10) for a pattetizer (1), having a detection device (110), which can be arranged on a conveying unit (3) of the palletizer (1), which is used for transporting away a pallet unit (4),
wherein the detection device (110) is designed in such a manner that an unauthorized access of a user (50) to the conveying unit (3) in a transport gap (42) between the pallet unit (4) and the conveying unit (3) when transporting the pallet unit (4) away can be detected at least up to a defined width (4.3) of the pallet unit (4), and at least from the defined width (4.3) of the pallet unit (4) the transporting away of the pallet unit (4) can be detected, wherein the detection device (110) comprises a first and a second detection element (111, 112), wherein the first and the second detection element (111, 112) in each case can be actuated by the pallet unit (4) from the defined width (4.3) and/or by the unauthorized access, whereby a safety function can be triggered, if the first detection element (111) is actuated before the second detection element (112), **characterized in that** the detection device (110) has a third and a fourth detection element (113, 114), wherein the first and second detection element (111, 112) can be arranged on a first side (41.1) of a conveying direction (41) of the conveying unit (3) and the third and fourth detection element (113, 114) can be arranged on a second side (41.2) of the conveying direction (41).

2. The safety device (10) according to Claim 1,
**characterized in**
**that** the first and the second detection element (111, 112) can be brought into a communication connection with a control unit (20) for triggering the safety function, in particular wherein the safety function comprises a triggering of a signal for the at least partial switching off of the palletizer (1).

3. The safety device (10) according to any one of the preceding claims,
**characterized in**
**that** the first and/or the second detection element (111, 112) has an in particular optical sensor element (120).

4. The safety device (10) according to any one of the preceding claims,
**characterized in**
**that** the sensor element (120) has a light output module (121), through which at least one light beam (123) can be emitted, in particular wherein the sensor element (120) has a light receiving module (122) for detecting a reflection (124) of the light beam (123) by the user (50).

5. The safety device (10) according to any one of the preceding claims,
**characterized in**
**that** the sensor element (120) can be arranged on the conveying unit (3) in such a manner that the light beam (123) acts at least substantially perpendicularly to a conveying direction (41) of the pallet unit (4) or that the first and the second detection element (111, 112) in each case span a light curtain, which in particular, can be spanned preferably perpendicularly to the conveying direction (41) of the pallet unit (4).

6. The safety device (10) according to any one of the preceding claims,
**characterized in**
**that** the detection device (110) has a detection region (110.1), in which an unauthorized access of the user (50) to the conveying unit (3) can be detected, wherein the detection region (110.1) has a distance (110.2) to the base region (3.1) of the conveying unit (3).

7. The safety device (10) according to any one of the preceding claims,
**characterized in**
**that** the first and second detection element (111, 112) are designed to be adjustable.

8. The safety device (10) according to any one of the preceding claims,
**characterized in**
**that** an additional monitoring device (12) is provided, so that the unauthorized access can be detected by the monitoring device (12) and the palletizer (1) can be switched off, and in particular that the monitoring device (12) can be deactivated, if the pallet unit (4) passes the monitoring device (12).

9. A system with a palletizer (1) for palletizing a material to be conveyed (2) and a safety device (10), in particular according to any one of Claims 1 to 10, wherein the safety device (10) has a detection device (110), which is arranged on a conveying unit (3) of the palletizer, which is used for transporting away a pallet unit (4),
wherein the detection device (110) is designed in such a manner that an unauthorized access of a user (50) to the conveying unit (3) in a transport gap (42) between the pallet unit (4) and the conveying unit (3) when transporting the pallet unit (4) away can be detected at least up to a defined width (4.3) of the pallet unit (4), and at least from the defined width (4.3) of the pallet unit (4) the transporting away of the pallet unit (4) can be detected, wherein the detection device (110) comprises a first and a second detection element (111, 112), wherein the first and the second detection element (111, 112) in each case can be actuated by the pallet unit (4) from the defined width (4.3) and/or by the unauthorized access, whereby a safety function can be triggered, if the first detection element (111) is actuated before the second detection element (112), **characterized in that** the detection device (110) has a third and a fourth detection element (113, 114), wherein the first and second detection element (111, 112) can be arranged on a first side (41.1) of a conveying direction (41) of the conveying unit (3) and the third and fourth detection element (113, 114) can be arranged on a second side (41.2) of the conveying direction (41).

10. The system according to Claim 9,
**characterized in**
**that** the arrangement at least of the detection device (110) on the conveying unit (3) is adapted to a width (4.1) of the pallet unit (4) in such a manner that a detection distance (42.1) between the first detection element (111) of the detection device (110) and the pallet unit (4) and/or between the first detection element (111) and the conveying unit (3) is less than 500 mm, preferably less than or equal to 230 mm, particularly preferably less than or equal to 200 mm.

11. The system according to Claim 9 or 10,
**characterized in**
**that** the palletizer (1) has a sliding table (5), on which the material to be conveyed (2) can be placed, and a lifting device (6) for stacking the material to be conveyed (2) on a pallet (4.2) to form a pallet unit (4), in particular, wherein the lifting device (6) is arranged underneath the sliding table (5) and the lifting device (6) has the conveying unit (3) for transporting the pallet unit (4) away or the conveying unit (3) is arranged on the lifting device (6) for transporting the pallet unit (4) away.

12. A method for increasing a safety of a conveying unit (3) of a palletizer (1), which is used for transporting away at least one pallet unit (4), and has a safety device (10) according to any one of Claims 1 to 8 with a detection device (110),
wherein the method comprises the following steps:
- Actuating the detection device (110), wherein a safety function is triggered, if an unauthorized access of a user (50) to the conveying unit (3) is detected in a transport gap (42) between the pallet unit (4) and the conveying unit (3) when transporting the pallet unit (4) away at least up to a defined width (4.3) of the pallet unit (4), and at least from the defined width (4.3) of the pallet unit (4) the transporting away of the pallet unit (4) is detected.

13. The method according to Claim 12,
**characterized in**
**that** the unauthorized access is detected, if a first detection element (111) of the detection device (110) is actuated before a second detection element (112) of the detection device (110) or that the actuating of the first and/or second detection element (111, 112) comprises an interruption of a light beam (123), in particular wherein a reflection (124) of the light beam (123) is detected.

## Revendications

1. Dispositif de sécurité (10) pour un palettiseur (1) comprenant
un dispositif de détection (110) pouvant être disposé sur une unité de convoyage (3) du palettiseur (1), qui permet l'évacuation d'une unité de palette (4),
le dispositif de détection (110) étant conçu de façon à ce qu'un accès non autorisé d'un utilisateur (50) à l'unité de convoyage (3) puisse être détecté dans un interstice de transport (42) entre l'unité de palette (50) et l'unité de convoyage (3) lors de l'évacuation de l'unité de palette (4) au moins jusqu'à une largeur (4.3) définie de l'unité de palette (4) et à ce que, au moins à partir de la largeur (4.3) définie de l'unité de palette (4), l'évacuation de l'unité de palette (4) puisse être détectée, le dispositif de détection (110) comprenant un premier et un deuxième éléments de détection (111, 112), les premier et deuxième éléments de détection (111, 112) pouvant être actionnés chacun par l'unité de palette (4) à partir de la largeur (4.3) définie et/ou par l'accès non autorisé, ce qui permet de déclencher une fonction de sécurisation lorsque le premier élément de détection (11) est actionné avant le deuxième élément de détection (112), **caractérisé en ce que** le dispositif de détection (110) comprend un troisième et un quatrième éléments de détection (113, 114), les premier et deuxième éléments de détection (111, 112) pouvant être disposés sur un premier côté (41.1) d'une direction de convoyage (41) de l'unité de convoyage (3) et les troisième et quatrième éléments de détection (113, 114) pouvant être disposés sur un deuxième côté (41.2) de la direction de convoyage (41).

2. Dispositif de sécurité (10) selon la revendication 1,
**caractérisé en ce que**
les premier et deuxième éléments de détection (111, 112) peuvent être mis en liaison de communication avec une unité de commande (20) pour le déclenchement de la fonction de sécurisation, plus particulièrement la fonction de sécurisation comprenant un déclenchement d'un signal pour l'arrêt au moins partiel du palettiseur (1).

3. Dispositif de sécurité (10) selon l'une des revendications précédentes,
**caractérisé en ce que**
le premier et/ou le deuxième élément de détection (111, 112) comprend un élément de capteur (120) plus particulièrement optique.

4. Dispositif de sécurité (10) selon l'une des revendications précédentes,
**caractérisé en ce que**
l'élément de capteur (120) comprend un module d'émission de lumière (121) à l'aide duquel au moins un rayon lumineux (123) peut être émis, plus particulièrement l'élément de capteur (120) comprenant un module d'absorption de lumière (122) pour la détection d'une réflexion (124) du rayon lumineux (123) par l'utilisateur (50).

5. Dispositif de sécurité (10) selon l'une des revendications précédentes,
**caractérisé en ce que**
l'élément de capteur (120) peut être disposé sur l'unité de convoyage (3) de façon à ce que le rayon lumineux (123) agisse au moins globalement perpendiculairement à une direction de convoyage (41) de l'unité de palette (4) ou à ce que les premier et deuxième éléments de détection (111, 112) délimitent chacun un rideau lumineux qui peut être disposé, plus particulièrement, de préférence perpendiculairement à la direction de convoyage (41) de l'unité de palette (4).

6. Dispositif de sécurité (10) selon l'une des revendications précédentes,
**caractérisé en ce que**
le dispositif de détection (110) comprend une zone de détection (110.1) dans laquelle un accès non autorisé de l'utilisateur (50) à l'unité de convoyage (3) peut être détecté, la zone de détection (110.1) comprenant une distance (110.2) par rapport à une zone de fond (3.1) de l'unité de convoyage (3).

7. Dispositif de sécurité (10) selon l'une des revendications précédentes,
**caractérisé en ce que**
les premier et deuxième élément de détection (111, 112) sont conçus de façon à être réglables.

8. Dispositif de sécurité (10) selon l'une des revendications précédentes,
**caractérisé en ce que**
un dispositif de surveillance (12) supplémentaire est prévu, de façon à ce que l'accès non autorisé puisse être détecté par le dispositif de surveillance (12) et à ce que le palettiseur (1) puisse être arrêté et plus particulièrement **en ce que** le dispositif de surveillance (12) peut être désactivé lorsque l'unité de palette (4) passe devant le dispositif de surveillance (12).

9. Système avec un palettiseur (1) pour la palettisation d'un produit convoyé (2) et un dispositif de sécurité (10), plus particulièrement selon l'une des revendications 1 à 10, le dispositif de sécurité (10) comprenant un dispositif de détection (110) qui est disposé sur une unité de convoyage (3) du palettiseur, qui permet l'évacuation d'une unité de palette (4),
le dispositif de détection (110) étant conçu de façon à ce qu'un accès non autorisé d'un utilisateur (50) à l'unité de convoyage (3) puisse être détecté dans un interstice de transport (42) entre l'unité de palette (50) et l'unité de convoyage (3) lors de l'évacuation de l'unité de palette (4) au moins jusqu'à une largeur (4.3) définie de l'unité de palette (4) et à ce que, au moins à partir de la largeur (4.3) définie de l'unité de palette (4), l'évacuation de l'unité de palette (4) puisse être détectée, le dispositif de détection (110) comprenant un premier et un deuxième éléments de détection (111, 112), les premier et deuxième éléments de détection (111, 112) pouvant être actionnés chacun par l'unité de palette (4) à partir de la largeur (4.3) définie et/ou par l'accès non autorisé, ce qui permet de déclencher une fonction de sécurisation lorsque le premier élément de détection (111) est actionné avant le deuxième élément de détection (112), **caractérisé en ce que** le dispositif de détection (110) comprend un troisième et un quatrième éléments de détection (113, 114), les premier et deuxième éléments de détection (111, 112) pouvant être disposés sur un premier côté (41.1) d'une direction de convoyage (41) de l'unité de convoyage (3) et les troisième et quatrième éléments de détection (113, 114) pouvant être disposés sur un deuxième côté (41.2) de la direction de convoyage (41).

10. Système selon la revendication 9,
**caractérisé en ce que**
la disposition d'au moins le dispositif de détection (110) sur l'unité de convoyage (3) est adapté à une largeur (4.1) de l'unité de palette (4) de façon à ce qu'une distance de détection (42.1) entre le premier élément de détection (111) du dispositif de détection (110) et l'unité de palette (4) et/ou entre le premier élément de détection (111) et l'unité de convoyage (3) soit inférieure à 500 mm, de préférence inférieure ou égale à 230 mm, plus particulièrement de préférence inférieure ou égale à 200 mm.

11. Système selon la revendication 9 ou 10,
**caractérisé en ce que**
le palettiseur (1) comprend une table coulissante (5) sur laquelle le produit à convoyer (2) peut être posé, et un dispositif de levage (6) pour l'empilement du produit à convoyer (2) sur une palette (4.2) afin d'obtenir une unité de palette (4), plus particulièrement le dispositif de levage (6) étant disposé en dessous de la table coulissante (5) et le dispositif de levage (6) comprenant l'unité de convoyage (3) pour l'évacuation de l'unité de palette (4) ou l'unité de convoyage (3) étant disposée sur le dispositif de levage (6) pour l'évacuation de l'unité de palette (4).

12. Procédé d'augmentation de la sécurité d'une unité de convoyage (3) d'un palettiseur (1), qui permet l'évacuation d'au moins une unité de palette (4), et qui comprend un dispositif de sécurité (10) selon l'une des revendications 1 à 8 avec un dispositif de détection (110),
ce procédé comprenant l'étape suivante :
- actionnement du dispositif de détection (110), une fonction de sécurisation se déclenchant lorsqu'un accès non autorisé d'un utilisateur (50) à l'unité de convoyage (3) est détecté dans un interstice de transport (42) entre l'unité de palette (4) et l'unité de convoyage (3) lors de l'évacuation de l'unité de palette (4) au moins jusqu'à une largeur (4.3) définie de l'unité de palette (4) et l'évacuation de l'unité de palette (4) étant détectée au moins à partir de la largeur (4.3) définie de l'unité de palette (4).

13. Procédé selon la revendication 12,
**caractérisé en ce que**
l'accès non autorisé est détecté lorsqu'un premier élément de détection (111) du dispositif de détection (110) est actionné avant un deuxième élément de détection (112) du dispositif de détection (110) ou **en ce que** l'actionnement du premier et/ou du deuxième élément de détection (111, 112) comprend une interruption d'un rayon lumineux (123), plus particulièrement une réflexion (124) du rayon lumineux (123) étant détectée.
